# EUROPÄISCHE PATENTSCHRIFT

(11) **EP 0 662 226 B1**
(45) Veröffentlichungstag und Bekanntmachung des Hinweises auf die Patenterteilung: **07.02.1996**
(21) Anmeldenummer: 93917560.0
(22) Anmeldetag: 18.08.1993
(51) Int. Cl.: G06F 9/44

(54) **VERFAHREN ZUR BEARBEITUNG EINES ANWENDERPROGRAMMS AUF EINEM PARALLELRECHNERSYSTEM**
METHOD OF PROCESSING AN APPLICATION PROGRAM ON A PARALLEL-COMPUTER SYSTEM
PROCEDE DE TRAITEMENT D'UN PROGRAMME D'APPLICATION SUR UN SYSTEME INFORMATIQUE PARALLELE

(30) Priorität: 22.09.1992 DE 4231709
(43) Veröffentlichungstag der Anmeldung: 12.07.1995
(73) Patentinhaber: SIEMENS AKTIENGESELLSCHAFT, D-80333 München (DE)
(72) Erfinder: KNOPP, Jürgen, D-85521 Ottobrunn (DE)
(86) Internationale Anmeldenummer: DE9300744
(87) Internationale Veröffentlichungsnummer: WO9407197

(56) Entgegenhaltungen:
- DE-A- 4 018 012
- PROCEEDINGS SUPERCOMPUTING '90, 12. November 1990 , NEW YORK, US, Seiten 856 - 864 XP269020 HIRONORI KASAHARA ET AL.: 'Parallel Processing of Near Fine Grain Tasks using Static Scheduling on OSCAR'
- PARALLEL COMPUTING, Bd. 8, Nr. 1-3 , Oktober 1988 , AMSTERDAM,NL, Seiten 31 - 40 XP284977 HARRY F. JORDAN: 'Programming language concepts for multiprocessors'

## Beschreibung

### Verfahren zur Bearbeitung eines Anwenderprogramms auf einem Parallelrechnersystem

Die Entwicklung neuer, schnellerer von Neumann-Rechner wird zunehmend davon beeinträchtigt, daß die physikalischen Grenzen der eingesetzten Technologie erreicht werden. Eine weitere Leistungssteigerung im Stile der letzten Jahrzehnte ist nicht in Sicht. Parallelrechner mildern diesen Umstand dadurch, daß zur Abarbeitung eines Anwenderprogramms mehrere Prozessoren eingesetzt werden. Allerdings ist es mit der Bereitstellung von Parallelrechnern nicht allein getan. Die wenigsten Anwenderprogramme lassen sich auf einfache Weise automatisch parallelisieren. Notwendig sind in jedem Fall Anweisungen oder Konstrukte, die es ermöglichen, Parallelität explizit zu formulieren.

In den vergangenen Jahren wurde für die parallele Programmierung eine große Anzahl von verschiedenen programmiersprachlichen Konstrukten erfunden, die es ermöglichen, Parallelität auszudrücken. Damit kann aber nicht das Problem umgangen werden, daß jede Parallelität Verwaltung zwischen den beteiligten Prozessoren beinhaltet. Deshalb muß im allgemeinen in Kauf genommen werden, daß jedes parallelisierte Programm bezüglich eines Prozessors zunächst einmal Geschwindigkeitseinbußen hinnehmen muß: Denn Programme laufen in paralleler Umgebung auf einem einzelnen Prozessor langsamer als in sequentiellen Umgebungen, selbst dann wenn keine Kommunikation zwischen den Prozessoren stattfindet. Allein die Verwaltung potentieller Parallelität kostet zusätzlichen Aufwand. Deshalb geht ein Teil der durch die Parallelität erreichten Beschleunigung der Programmbearbeitung wieder verloren.

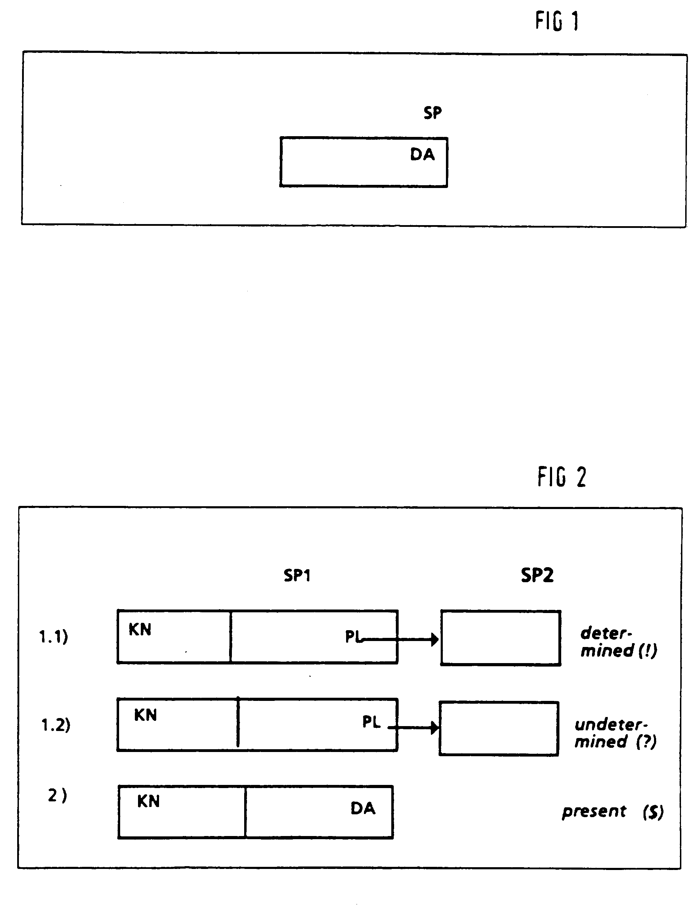

Dieses Problem wird anhand von Figur 1 und Figur 2 weiter erläutert.

Auf normalen sequentiellen von Neumann-Rechnern werden alle Daten DA in Speicherplätzen SP des Arbeitsspeichers ASP gehalten. Damit kann auf die beim Ablauf des Programms benötigten Daten direkt zugegriffen werden (Figur 1).

Zur Laufzeit von parallel zu bearbeitenden Programmen werden dagegen häufig Daten parallel berechnet. Deshalb werden Daten nicht wie im sequentiellen Fall dargestellt, sondern es sind kompliziertere Strukturen gegeben (Figur 2). Ein Speicherplatz SP1 beinhaltet dann eine Kennung KN, die angibt, ob ein normales (sequentieller Fall) oder ein parallel zu berechnendes Datum vorliegt und ggf. weitere Information darüber, ob und wo das Datum zu finden ist. Die Parallelauswertung ist dadurch gekennzeichnet, daß nicht bekannt ist, ob Daten schon berechnet sind oder nicht. Während sich diese Eigenschaft bei sequentiellen Programmen aus dem Ablauf des Programmes ergibt, liegt im parallelen Fall eine kompliziertere Situation vor. Das Datum könnte in einem auf einem anderen Prozessor ablaufenden Prozeß zu berechnen sein oder nicht. Wenn der erste Fall vorliegt, kann dieses Datum bereits in dem parallelen Prozeß berechnet sein oder nicht. Diese Verhältnisse zeigt die Figur 2. Der Fall 2 entspricht an sich dem Fall der Figur 1 und unterscheidet sich nur dadurch, daß das Programm wegen der möglichen parallelen Ausführung eine andere Speicherung des Datums erfordert. Das Datum DA ist dabei mit einer Kennung KN verbunden, die angibt, daß dieses Datum sequentiell oder normal berechnet wird. Ein solches Datum soll im folgenden als "present" bezeichnet werden und abgekürzt im Code mit einem $ Zeichen versehen sein. Der Fall 1) dagegen behandelt den Fall, daß eine parallele Bearbeitung von Prozessen des Anwenderprogramms vorliegt. Hier ist pro Speicherplatz wiederum die Kennung KN vorgesehen, die nun angibt, daß das Datum in einem parallel ablaufenden Prozeß ermittelt wird. Anstelle des Datums wird nun ein Platzhalter PL vorgesehen, der angibt, wo das Datum DA im Speicher ASP vorliegt. Im Fall 1.1 soll das Datum DA bereits berechnet sein, wenn der Zugriff auf dieses Datum erfolgt. Dieser Fall wird im folgenden mit "determined" bezeichnet und soll abgekürzt im Code mit einem Ausrufungszeichen (!) gekennzeichnet werden. Im Fall 1.2 dagegen weist der Platzhalter PL auf einen Speicherplatz SP2 hin, der zum Zeitpunkt des Zugriffs auf das Datum noch leer ist, was bedeutet, daß dieses Datum im parallel ablaufenden Prozeß noch nicht berechnet ist. Dieser Fall soll im folgenden mit "undetermined" oder "unknown" und abgekürzt im Code mit "?" bezeichnet werden.

Die geschilderte Problematik bei der parallelen Berechnung von Prozessen eines Programms ist ausführlicher geschildert in der PCT-Anmeldung mit der Veröffentlichungsnummer WO 91/1952.

In Parallelitätsmodellen ist es möglich, daß für beliebige Anweisungen neben dem einfachen Fall 2 der Figur 2 einer der Fälle 1.1 oder 1.2 der Figur 2 vorliegen kann. Es muß also bei jedem Zugriff untersucht werden, ob die Anweisung dieses Datum bei der Ausführung wirklich benötigt. Ein Zugriff, der ein Datum wirklich benötigt, soll im folgenden "dereferenzierender" Zugriff (abgekürzt deref) genannt werden. Bei dereferenzierenden Zugriffen muß dann immer darauf geachtet werden, daß eventuell indirekt (Fall 1.1) oder direkt (Fall 2) auf Daten zugriffen wird und daß nicht auf Daten zugegriffen wird. die noch nicht berechnet sind (Fall 1.2). Damit muß bei der Ausführung des Programms bei Anweisungen, die auf ein Datum zugreifen, immer geprüft werden,
a) ob ein normales (Fall 2) oder parallel zu berechnendes (Fall 1) Datum vorliegt (present Test),
b) ggf. ob das Datum im Fall 1 schon berechnet wurde (determined Test).

Wenn das Datum schon berechnet ist, kann auf das Datum zugegriffen werden (Fall 1.1). Wenn dies nicht der Fall ist (Fall 1.2), muß auf die Berechnung des Datums gewartet werden und erst dann kann wie im Fall 1.1 weitergegangen werden. Wegen dieses Wartens wird im folgenden von impliziter Synchronisation gesprochen.

Das der Erfindung zugrundeliegende Problem besteht darin, ein Verfahren anzugeben, mit dem bereits bei der Kompilierung des zu bearbeitenden Anwenderprogramms festgelegt werden kann, für welche Anweisungen der Test a bzw. b unterbleiben kann. Dieses Problem wird erfindunsgemäß gemäß den Merkmalen des Patentanspruchs 1 gelöst.

Somit wird bei der Kompilierung festgestellt, in welche Kategorie die einzelnen Anweisungen des Programms einzuordnen sind und die Anweisungen markiert, deren Zugriff auf ein Datum führt, daß present ist (Fall 2) oder doch determinded (Fall 1.1). Für diese beiden Fälle ist dann nicht mehr erforderlich, daß ein present Test oder ein determinded Test durchgeführt werden muß. Nur noch im Fall 1.2 muß so vorgegangen werden wie es bisher allgemein der Fall ist, d.h. es muß der present Test und der determinded Test durchgeführt werden und auf die Berechnung des Datums gewartet werden.

Vorteilhaft ist es, wenn alle Anweisungen einer Programmiersprache in einer Liste mit ihrem Kontext angegeben werden, der angibt, ob die Ausführung dieser Anweisung einen Zugriff enthält, der ein Datum benötigt (dereferenzierend) oder nicht benötigt (non-dereferenzierend). Anhand dieser Liste kann dann während der Kompilierung der Kontext festgestellt werden, in dem die Anweisung steht.

Weiterhin wird bei der Kompilierung des Programms den in den Anweisungen enthaltenen Variablen deren Eigenschaft zugeordnet, also ob sie present, determined oder unknown sind. Dies kann in der Regel festgestellt werden, wenn die einzelnen Variablen zur Zeit ihres Auftretens in eine Symbol-Tabelle aufgenommen werden und dort zusätzlich angegeben wird, welche Eigenschaft jede Variable hat. Mit dem Programmlauf können sich natürlich diese Eigenschaften ändern. In der Tabelle ist somit die Vorgeschichte für jede Variable enthalten, die zum Zeitpunkt der Untersuchung einer Anweisung herangezogen werden kann.

Anweisungen, die Verzweigungsbefehle darstellen, werden zweckmäßigerweise so behandelt, daß für jeden Zweig die Eigenschaften der Variablen festgestellt und in die Symboltabelle eingetragen werden und dann für die Beurteilung der Zweig herangezogen wird, dessen Variablen-Eigenschaften am ungünstigsten sind.

Wenn eine Anweisung eine Rekursion beinhaltet, dann ist es zweckmäßig von der Starteigenschaft present und dereferenzierend auszugehen und die Rekursion so lange durchzuführen, bis sich die Eigenschaften der Variablen nicht mehr verändern.

Für Schleifen werden ausgehend von den aus der Symboltabelle resultierenden Eigenschaften die Durchläufe solange wiederholt bis sich die Eigenschaften der Variablen nicht mehr ändern.

Besonders vorteilhaft ist es, wenn allen Variablen, die die Eigenschaft determined haben, die Eigenschaft present zugeordnet wird und dazu zusätzlich eine Anweisung eingeführt wird, die die Ausführung dieser Anweisung solange stoppt, bis die Variable bestimmt ist (determined ist).

Andere Weiterbildungen der Erfindung ergeben sich aus den Unteransprüchen.

Anhand von Ausführungsbeispielen, die in den Tabellen dargestellt sind, wird die Erfindung weiter erläutert.

Es zeigen
- Tabelle 1: einen Programmausschnitt, der zum leichteren Verständnis im Pseudocode geschrieben ist,
- Tabelle 2: dasselbe Programm mit Markierungszeichen entsprechend dem Verfahren,
- die Tabellen 3 bis 11: Beispiele für die Art, wie das erfindungsgemäße Verfahren einzelne Anweisungen oder Konstrukte untersucht.

In den meisten Sprachen mit impliziter Synchronisation ist es nötig, die Semantik der Basisoperationen (Konstrukte oder Anweisungen) bezüglich dieser Synchronisation festzulegen. Dies kann mit Hilfe einer Liste erfolgen, in der diese Eigenschaften enthalten sind. Zum Beispiel können folgende Festlegungen gelten:

Die Anweisungen werden bezüglich jedes ihrer Argumente qualifiziert in:
- das Argument wird immer dereferenzierend benötigt;
- das Argument wird manchmal dereferenzierend benötigt;
- das Argument wird von dieser Anweisung nicht dereferenzierend benötigt.

Diese vordefinierten Anweisungen werden bezüglich jedes ihrer Ergebnisse qualifiziert, wobei es Anweisungen oder Funktionen mit mehreren Ergebnissen gibt:
- das Ergebnis ist immer ein bereits berechneter Wert;
- das Ergebnis ist nicht immer ein bereits berechnender Wert.

Die Eigenschaft jeder Anweisung, ob ihr Argument dereferenzierend oder non dereferenzierend benötigt wird, kann in einer Liste gesammelt werden und später bei der Kompilierung verwendet werden.

Die Eigenschaften der Ergebnisse der Anweisungen hängen neben der Qualifizierung der Argumente als dereferenzierend oder non dereferenzierend davon ab, welche Eigenschaften die verwendeten Variablen haben, ob sie present, determinded oder unknown sind. Diese Eigenschaften der Variablen können in einer sog. Symboltabelle gesammelt werden.

Das Verfahren läßt sich am besten mit Hilfe des Programmabschnitts der Tabelle 1 erläutern. Dort sind einige typische Anweisungen im Pseudocode formuliert worden und es ist weiter angegeben, in welchen Kontext diese Anweisungen steht. In einer Symboltabelle ist angegeben, welche Eigenschaft die auftretenden Variablen haben. Zusätzlich ist unter self angegeben, an welchen Stellen der Programmcode zu markieren ist.

In der Symboltabelle werden die Eigenschaften vor und nach der Ausführung der Anweisung (davor - danach) angegeben. Die Belegung von Kontext bezieht sich auf die jeweilige Unterstruktur. Falls diese zwei Komponenten besitzt (zum Beispiel (x = = 4)) wird von L- oder R-Kontext gesprochen, falls nur eine Komponente existiert (print (Y)), einfach von Kontext. Zusätzlich ist der self-Wert der entsprechenden Unterstruktur(en) angegeben. Daraus ergeben sich die Stellen, an denen das Zielprogramm zu markieren ist. Auch hier wird L- und R- zur Bezeichnung der linken bzw. rechten Unterstruktur genutzt. Zu beachten ist, daß die self-Eigenschaft nur an dereferenzierenden Stellen von Bedeutung ist. Nur hier findet zur Laufzeit ein Test auf present statt, nur hier gibt es also etwas zu unterdrücken.

Für die Werte X-init-value und Y-init-value sei angenommen, daß X-init-value unknown ( ) ist und Y-init-value present ($) ist.

In dem Programmabschnitt der Tabelle 1 treten nur zwei Variable X, Y auf, sie werden mit dem ersten Befehl eingeführt und in die Symboltabelle aufgenommen. Mit der Anweisung 2 wird der Variablen X eine 1 zugeordnet, dementsprechend in die Symboltabelle für X die Eigenschaft present aufgenommen. Der Kontext der Anweisung 2 ist klar und braucht nicht weiter erläutert zu werden.

Inhalt der Anweisung 3 ist es, Y als Funktion von X zu berechnen. Da die Funktion F unbekannt ist, wird zu diesem Zeitpunkt die Variable Y unknown, dies wird in die Symboltabelle eingetragen. Da F nicht bekannt ist, wird angenommen, daß es nicht dereferenzierend ist (sichere Approximation).

Die Zeilen 4 bis 6 des Programms umfassen eine if ... then ... else ... Anweisung. Befehl 4 der Anweisung, in dem die Bedingung enthalten ist, die zu überprüfen ist, steht im Kontext dereferenzierend, die verwendete Variable X ist wie die Symboltabelle ergibt present, die Bedingung kann also überprüft werden. Im Befehl 5 der Anweisung soll Y gedruckt werden, wenn die Bedingung erfüllt ist. Da Y unkown ist, kann dieser Befehl erst dann ausgeführt werden, wenn Y gemäß Anweisung 3 berechnet worden ist. Darauf muß gewartet werden. Das heißt, wenn dieser Befehl ausgeführt wird, muß die Variable Y determined sein. Wenn die Bedingung nach Befehl 4 nicht erfüllt ist, ist Befehl 6 auszuführen und damit wird die Variable Y gleich 1 gesetzt und würde present werden.

Die Anweisung 7, die einen Druckbefehl für die Variable X gibt, steht im Kontext dereferenzierend, da nur dann gedruckt werden kann, wenn die Variable X vorhanden ist, dies ist auch möglich, da die Variable present ist.

Anweisung 8 gibt einen Druckbefehl für die Variable Y. Diese Anweisung ist ebenfalls dereferenzierend und kann auch ausgeführt werden, da Y zumindest die Eigenschaft determined haben muß. Denn entweder ist Befehl 5 zum Zeitpunkt des Druckbefehls 8 bereits ausgeführt woroen oder die Zuweisung Befehl 6 ist erfolgt.

Anweisung 9a, 9b stellt eine arithmetische Operation dar, nämlich eine Addition. Der Kontext einer arithmetischen Operation ist immer derefenzierend. Die Anweisung kann ausgeführt werden, da X present ist. Damit wird auch Y present und wird entsprechend in der Symboltabelle bezeichnet.

Anweisung 10 bis 12 ist wiederum eine if Anweisung und wird entsprechend der Anweisung 4 bis 6 behandelt. Der Kontext der Befehle der Anweisung ist dereferenzierend, da die Variablen present sind, können die Befehle auch sofort ausgeführt werden. Dadurch ändern sich die Eigenschaften der Variablen nicht, so daß in der Symboltabelle keine Änderung für die Variablen eingetragen werden muß.

Aus Tabelle 1 kann somit entnommen werden, wie die Eigenschaften der im Programm verwendeten Variablen in der Symboltabelle bei der ersten Zuweisung eingetragen werden und wie dann diese Eigenschaften der Variablen später bei anderen Anweisungen verwendet und sich dabei in ihrer Eigenschaft ändern können. Für die Variablen jeder Anweisung gibt es also eine Vorgeschichte, die in der Symboltabelle enthalten ist. Der Kontext der Anweisungen ergibt sich aus der Funktion, die die Anweisung darstellt, und kann in einer Liste festgelegt sein.

Tabelle 2 zeigt nun den Programmabschnitt nach Tabelle 1 mit Markierung der Eigenschaften der Variablen. Wenn die Eigenschaft einer Variable present ist, dann wird hinter die Variable ein $ Zeichen gesetzt, wenn die Eigenschaft einer Variable determined ist, wird hinter dieser Variable ein ! gesetzt. Wenn die Eigenschaft einer Variable unknown ist, dann wird diese Variable nicht markiert. Zudem wird das Ergebnis einer Anweisung in entsprechender Weise markiert. Dies kann z.B. dem Befehl 4 oder 9 entnommen werden. Wenn die Anweisungen eines Programms derart markiert sind, dann kann während des Programmlaufs festgestellt werden, ob bei einer Anweisung mit Zugriff auf ein Datum dieses Datum direkt adressiert werden kann oder über einen Platzhalter adressiert werden kann und vorhanden ist oder über einen Platzhalter adressiert werden muß und nicht vorhanden ist. Dementsprechend können die oben angegebenen Tests entfallen, wenn der Zugriff auf ein Datum führt, das present ist, während der Zugriff auf ein Datum, das determined ist, nicht mehr erfordert, daß auf das Datum gewartet werden muß.

Wenn zusätzlich bei allen Anweisungen, die auf ein Datum zugreifen, das determined ist, diesem Datum die Eigenschaft present zugeordnet wird, d.h. der Platzhalter durch das Datum überschrieben wird, dann sind auch für diesen Fall keine Tests mehr erforderlich.

Das erfindungsgemäße Verfahren soll im folgenden losgelöst von einem Anwendungsfall abstrakter behandelt werden. Dazu werden einige typische Anweisungen aus der Programmiersprache untersucht.

Tabelle 3 zeigt ganz allgemein, welche Analyse durchgeführt werden muß, um festzustellen, ob das Ergebnis einer Anweisung markiert werden muß oder nicht markiert werden muß. Dazu ist eine Untersuchung des Argumentes des Codes der Anweisung, des Kontextes, in dem die Anweisung steht und der Eigenschaften des Argumentes der Anweisung erforderlich. Dies wird im linken Ausdruck der Analysefunktion ANA im Pseudocode dargestellt. Das Ergebnis der Untersuchung ergibt einen Ergebniscode (RES-Code), der entweder markiert ist oder nicht markiert ist; weiterhin ergibt sich eine Ergebnissymboltabelle (RES-Symb), in der die durch die Ausführung der Anweisung sich ergebende Änderung einer Eigenschaft der Ergebnisvariable eingetragen wird und zusätzlich wird noch die Eigenschaft des Ergebnisses, die in der Markierung des Codes zum Ausdruck kommt,noch einmal zur Benutzung bei der Analyse des umfassenden Kontexts angeführt und zwar unter der Bezeichnung self-prop.

Als erstes soll eine Anweisung untersucht werden, bei der eine arithmetische Operation auszuführen ist (Tabelle 4). Die arithmetische Operation soll dabei zwei Operanden left, right miteinander verknüpfen. Mit Hilfe der Analyse-Funktion werden nun sowohl die beiden Operanden als auch das Ergebnis rekursiv untersucht. Die Untersuchung des linken Operanden left (jetzt n-left genannt) ergibt, daß dieser Operand den Kontext dereferenzierend hat und daß die Eigenschaft des Operanden sich aus der Symboltabelle SYMB, also aus der Vorgeschichte dieser Variablen, ergibt. Dies wird in der zweiten Zeile der Figur 6 dargestellt. Als nächstes wird der rechte Operand right untersucht. Selbstverständlich steht auch dieser Operand in Kontext dereferenzierend und die Eigenschaft ergibt sich aus der Symboltabelle, wie sie nach der Untersuchung des Left-Operanden vorliegt. Deswegen ist sie hier mit L-SYMB bezeichnet. Das Ergebnis (result) ergibt, daß die Anweisung n-Left+n-Right immer die Eigenschaft present haben muß und damit im Code mit einem $ zu markieren ist. Die Eigenschaft des Ergebnisses wird durch die Eigenschaft festgelegt, die aus der Ausführung der Operation sich ergibt. Sollten die Eigenschaften der Operanden left bzw. right weder determinded noch present sein, dann werden sie nicht markiert. Das würde bedeuten, daß die Ausführung der Operation warten muß, bis die Operanden zumindest determined sind. Trotzdem ist das Ergebnis der Operation immer present, da immer ein neuer Wert erzeugt wird, wenn die Operanden determined sind.

Die Tabelle 5 beschäftigt sich mit der Untersuchung der Funktion Cons, mit der Listen gebildet werden. Sie baut eine Liste auf, deren Komponenten die beiden Argumente von Cons sind. Da zur Listenbildung die effektiven Werte der Argumente unbedeutend sind, finden hier rekursive Aufrufe statt, die in nicht dereferenzierenden Kontext stehen. Auch hier ergeben sich die Eigenschaften der Argumente aus der Symboltabelle zum Zeitpunkt der Untersuchung der Komponenten der Anweisung. Das heißt, die Symboltabelle wird ständig auf dem neuesten Stand gehalten. Das Ergebnis result ist bei der Anweisung Cons present, d.h. ein Listenknoten wird sofort erzeugt (die Listenelemente selber können dabei noch unberechnet sein).

Tabelle 6 beschäftigt sich mit der LET-Anweisung. Wie z.B. das Programm der Tabelle 1 zeigt, muß zum Auftreten des LET-Befehles der Initialwert noch nicht vorliegen, d.h. "VALUE" steht im Kontext non-deref. Die Eigenschaft von VALUE ergibt sich aus der (Analyse von VALVE). Wie weiterhin aus der Tabelle 1 erkennbar ist, wird nun in die neue Symboltabelle die Variable X eingetragen. Ihre Eigenschaften sind identisch mit den Eigenschaften von VALUE. Neu-SYMB wird an Body weitergereicht, also den zwischen LET und END-LET liegenden Programmbereich. Der Kontext von Boay ist gleich mit dem Kontext der gesamten LET-Anweisung. Die Ergebniseigenschaft von LET ist gleich mit der Ergebniseigenschaft von Body. Die resultierende Symbol-Tabelle ist die im Body berechnete Symbol-Tabelle, wobei die Neueintragung von X herausgenommen wird (Cut-Top-Level) weil X außerhalb dieser LET-Clausel nicht sichtbar ist. Die erläuterten Verhältnisse ergeben sich auch aus der Tabelle 6.

Den Fall der Zuweisung zeigt die Tabelle 7. Hier wird der Variablen X die Variable Y zugeordnet. Die Variable X erbt sämtliche Eigenschaften von Y. Die Eigenschaften von Y bleiben unverändert und ergeben sich aus der Vorgeschichte. Die Ergebniseigenschaft dieser Anweisung ist gleich mit der Eigenschaft der rechten Seite, da der Ergebniswert einer Zuweisung immer gleich dem Wert ist, der zugewiesen wird. Die Notation new-SYMB (X/RES-PROP) bedeutet, daß in der Symbol-Tabelle new-SYMB unter X die Eigenschaft von RES-PROP eingetragen wird.

Tabelle 8 beschäftigt sich mit der if-then-else-Anweisung. Aus dieser Anweisung werden die definierten Eigenschaften hinsichtlich der Dereferenzierung deutlich. Die Bedingung BED wird bei der Abarbeitung immer benötigt: if ist dereferenzierend in seinem ersten Argument, im Aufruf von der Analyse-Funktion ANA wird also der konstante Kontext deref übergeben. Die beiden Fallunterscheidungszweige erben den Kontext der gesamten Fall-Unterscheidung. Als Auswertungsreihenfolge ergibt sich zuerst eine Abarbeitung der Bedingung, dann eines der beiden Zweige. Da die Bedingung nicht bekannt ist, wird angenommen, daß beide Fall-Unterscheidungszweige abgearbeitet werden müssen und über die Ergebnisse konservativ approximiert: RES-PROP wird durch Schnitt der Eigenschaften der beiden Zweige definiert, es erhält als Wert somit die schlechtere Eigenschaft. Analog wird die Symboltabelle durch einen Schnitt berechnet: Für alle Einträge wird der jeweils schlechtere Wert übernommen.

Das gleiche Muster konservativer Approximation wird auch bei anderen Anweisungen angewandt. Weiß man nicht, ob oder wie oft ein (Teil-)Konstrukt durchlaufen wird, so werden alle Möglichkeiten berücksichtigt und durch Schnittbildung konservativ approximiert. Zum Beispiel werden Schleifen auf diese Weise behandelt: Die Schleife wird mehrfach durchlaufen, wobei die neuen Endbedingungen und Endsymboltabellen mit den vorhergehenden geschnitten werden. Sobald sich nichts mehr verändert, hat eine Approximation über eine beliebige Anzahl von Schleifendurchläufen stattgefunden. Die statisch erkennbaren Eigenschaften der Schleife sind bestimmt.

Am Beispiel der Tabelle 9 wird erläutert, wie sich die Eigenschaften von Variablen verändern können, ohne daß diese einen neuen Wert erhalten. Es wird zum Beispiel die Anweisung untersucht: Y = IF VAR THEN VAR + 1 ELSE VAR. Die Variable VAR wird in der Bedingung dereferenzierend benötigt.

Daraus ergibt sich, daß bei der Benutzung der Variablen in der Addition davon ausgegangen werden kann, daß VAR zumindest determined ist. In diesem Beispiel vererbt sich diese Eigenschaft sogar auf Y. Damit ergibt sich die allgemeine Analyse-Funktion für Variable gemäß der Tabelle 9. Falls VAR vorher nicht determinded war, ist die Symbol-Tabelle zu ändern. Es ist zu beachten, daß durch dereferenzierenden Zugriff die Variable nicht present, sondern determined werden.

Die Analyse einzelner benutzerdefinierter Funktionen ist hilfsreich zur Analyse von anderen benutzerdefinierter Funktionen, die diese aufrufen. So wird z.B. zu jeder einstelligen, einwertigen Funktion F: f y eine Funktion ANA - F gemäß Tabelle 10 erzeugt. Ausgehend von der ursprünglichen Eigenschaft des Funktionsarguments wird die Eigenschaft berechnet, die das Argument und das Ergebnis des Funktionsaufrufes nach diesem Aufruf besitzt. Für Funktion mit mehr Argumenten und mehr Ergebnissen gilt entsprechendes. Sobald während der Analyse einer Funktion der Quellcode einer aufgerufenen Funktion nicht zugänglich ist, wird pessimistisch approximiert: Der Aufruf einer solchen Funktion zerstört alle Eigenschaften der Aufrufstelle.

Rekursive Funktionen werden analog zu Schleifen behandelt: Ausgehend von Anfangseigenschaften für die rekursiven Funktionsaufrufe wird der Funktionsrumpf analysiert. Dieses Vorgehen wird iteriert: ausgehend von den neu berechneten Eigenschaften der Funktion wird wieder der Rumpf analysiert, wobei neue Eigenschaften bestimmt werden. Sobald sich die Eigenschaften nicht mehr ändern, kann abgebrochen werden. Wichtig ist hier, die richtigen Anfangseigenschaften zu wählen. Anders als an allen anderen Stellen in der Analyse ist hier optimistisch zu approximieren: die Starteigenschaften sagen aus, daß alle Argumente der rekursiven Funktion dereferenziert werden und daß alle Ergebnisse present sind.

Durch dereferenzierende Zugriffe erhalten Variable die Eigenschaft determinded. Bessere Ergebnisse könnten jedoch erzielt werden, wenn die Variablen present werden würden. Dies ist zu erreichen, ohne daß dabei Nachteile entstehen. Das Verfahren muß so geändert werden, daß sobald eine Variable determined ist, sie mit dem eigenen Wert überschrieben wird. Damit wird der Fall 1.1 durch den Fall 2 ersetzt (Figur 2). Da nun die present Eigenschaft vorliegt, ist bei allen weiteren dereferenzierenden Nutzungen der entsprechenden Variablen überhaupt kein Test mehr nötig. Das gleiche gilt für alle weiteren Variablen, die diese Eigenschaft erben. Ein Beispiel zeigt Tabelle 9.

Der Vorteil des erfindungsgemäßen Verfahrens besteht darin, daß dynamische Überprüfungen eliminiert werden, die zur Laufzeit paralleler Programme stattfinden müssen. Durch eine statische Analyse des Programms wird festgestellt, an welchen Stellen solche Überprüfungen nicht stattfinden müssen, weil aus dem Ablauf des Programms erkennbar ist, welches das Ergebnis der Überprüfung ist. Wichtig dazu ist,
- daß die Basiskonstrukte oder Anweisungen hinsichtlich der Eigenschaft dereferenzierend, manchmal dereferenzierend, nie dereferenzierend qualifiziert werden;
- daß die Variablen und (Teil-) Ausdrücke gemäß ihren Eigenschaften present, determined oder unknown durch abstrakte Interpretation des Programms qualifiziert werden. Ergebnis der Analyse ist ein transformiertes Programm, aus dem erkennbar ist, wo Tests unterbleiben können,
- daß Variable, die determined sind, mit ihrem eigenen Wert überschrieben werden, so daß sie present werden. Damit werden die Analyseergebnisse entscheidend verbessert, ohne daß sich die Bedeutung des Programms verändert,
- daß die Nutzung von Analyseergebnissen einzelner Funktionen zur Analyse anderer Funktionen herangezogen werden kann;
- und die Behandlung von Rekursion durch Iteration ausgehend von einer optimistischen Approximation erfolgt.

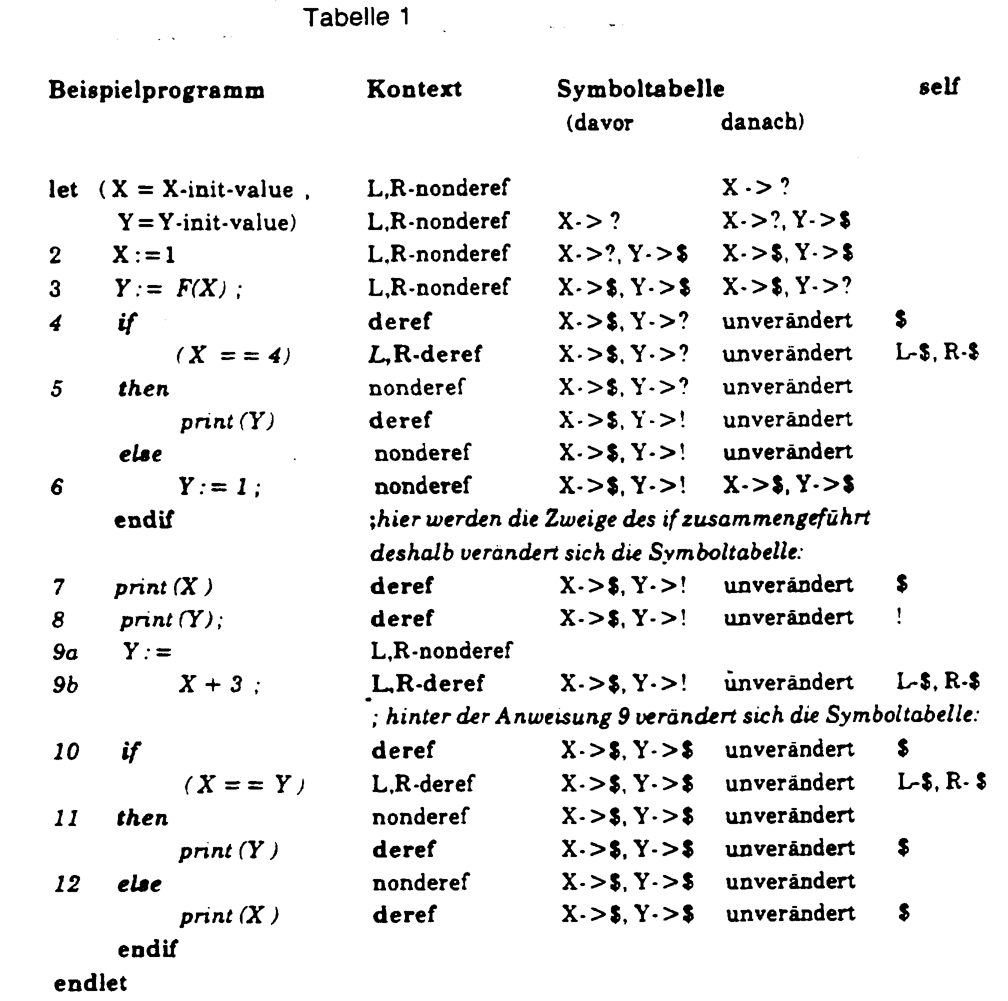

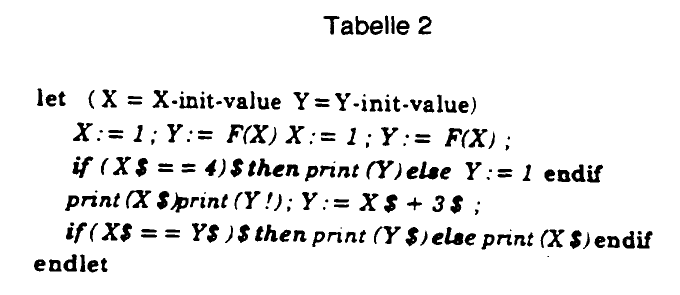

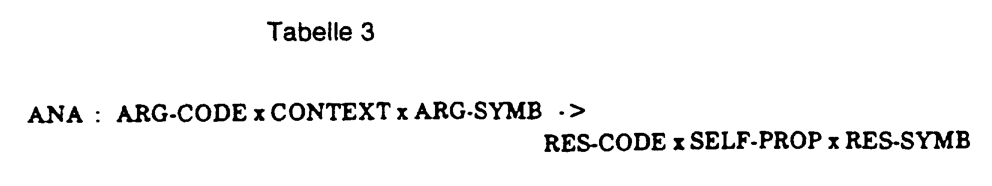

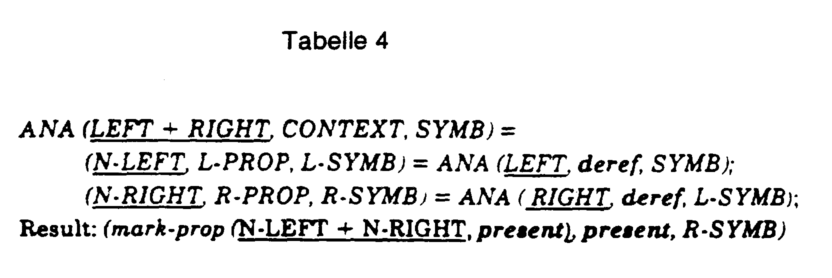

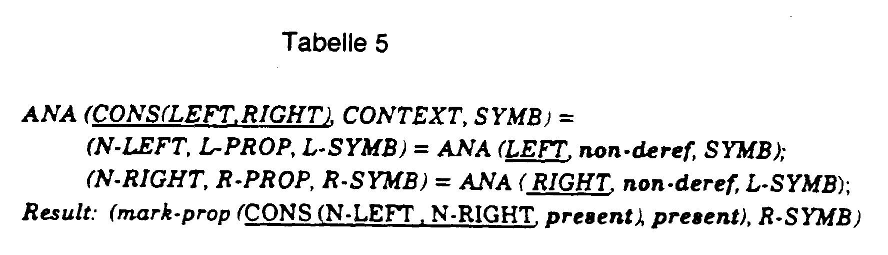

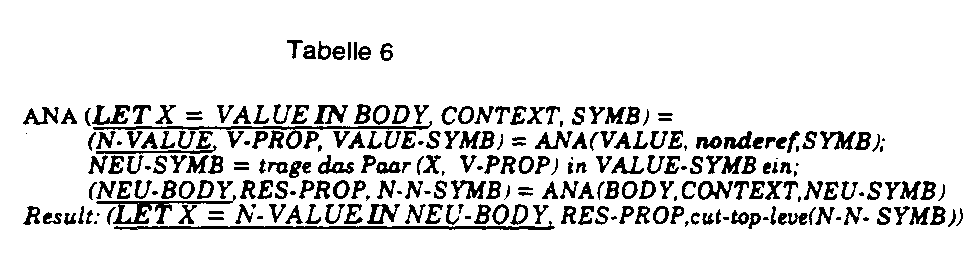

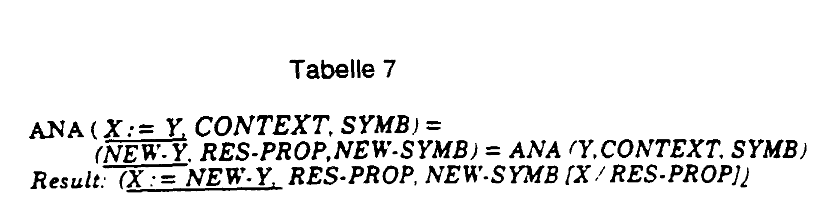

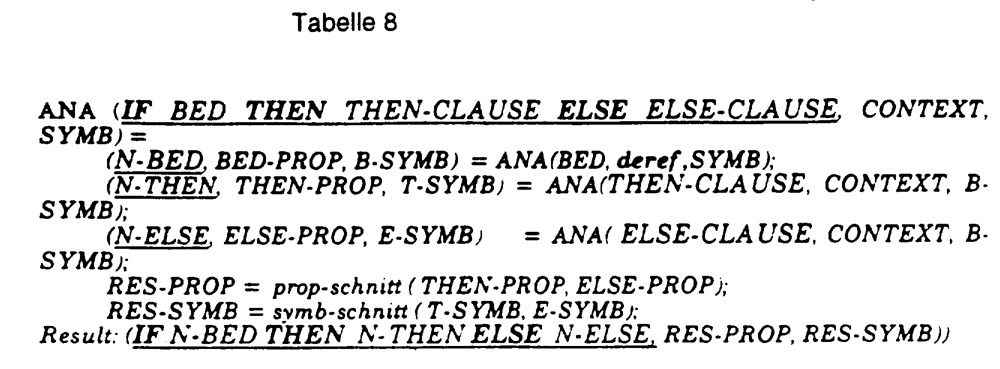

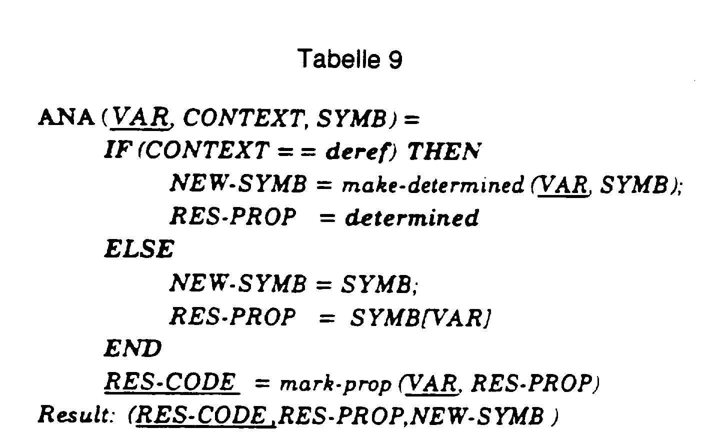

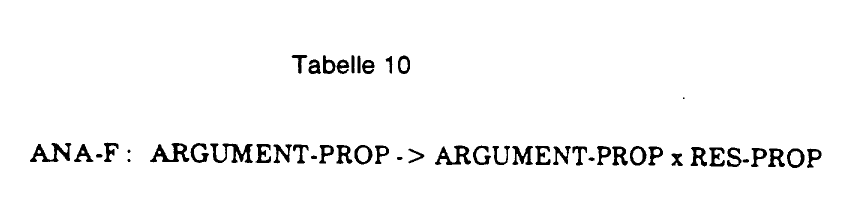

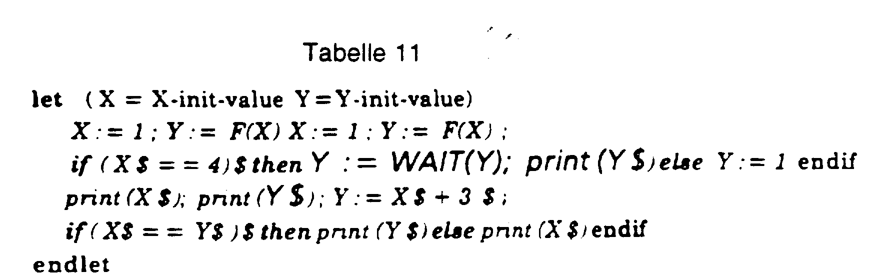

## Patentansprüche

1. Verfahren zur Bearbeitung eines Anwenderprogramms auf einem Parallelrechnersystem,
a) bei dem die einzelnen Prozesse auf verschiedenen Rechnern bearbeitet werden,
b) bei dem der Code des Anwenderprogramms eingelesen wird,
c) bei dem bei der Compilierung des Anwenderprogramms für jede Anweisung anhand einer Liste, in der angegeben ist, ob die Ausführung einer Anweisung einen Zugriff auf ein Datum benötigt (dereferenzierend) oder nicht, festgestellt wird, ob ihre Ausführung einen Zugriff auf ein Datum erfordert,
d) bei dem für diese Anweisungen in einer Symboltabelle als Eigenschaft eingetragen wird, ob deren Variable,
d1) im aktuellen Prozeß bereits geschrieben worden ist, (present),
d2) parallel ausführbar ist und bereits berechnet ist, wenn der aktuelle Prozeß die Variable benötigt (determined)
d3) parallel ausführbar ist und möglicherweise noch nicht berechnet ist, wenn der aktuelle Prozeß die Variable benötigt (unknown),
e) bei dem im übersetzten Programm die Anweisungen mit einem ersten Markierungszeichen versehen werden, für die der Fall d1) gilt, dagegen mit einem zweiten Markierungszeichen versehen werden, für die der Fall d3) gilt, f) bei dem das Ergebnis einer ausgeführten Anweisung gemäß deren Eigenschaften markiert wird und die Ergebnisvariable in die Symboltabelle mit ihren Eigenschaften eingetragen wird.

2. Verfahren nach Anspruch 1,
bei dem für Verzweigungsbefehle für jeden Zweig die Eigenschaft der Ergebnisse festgestellt wird und in die Symboltabelle eingetragen wird, bei dem das Ergebnis des Verzweigungsbefehls als Ergebnis und die Symboltabelle des Zweiges gewählt wird, dessen Eigenschaften am ungünstigsten ist.

3. Verfahren nach Anspruch 1,
bei dem bei einer Rekursionsanweisung bzw. einer Schleifenanweisung von der Starteigenschaft present und dereferenzierend ausgegangen wird und die Funktion iterativ solange analysiert wird, bis sich die Eigenschaften nicht mehr ändern.

4. Verfahren nach einem der vorhergehenden Ansprüche, bei dem allen Variablen, die die Eigenschaft determined haben, die Eigenschaft present zugeordnet wird und dazu eine Anweisung zusätzlich eingefügt wird, die die Ausführung der Anweisung solange stoppt, bis die Variable bestimmt ist.

## Claims

1. Method of processing an application program on a parallel-computer system,
a) in which the individual processes are processed on different computers,
b) in which the code of the application program is read in,
c) in which, during compiling of the application program, it is established for each instruction, on the basis of a list in which it is specified whether the execution of an instruction requires an access to a data item (dereferencing) or not, whether its execution requires an access to a data item,
d) in which it is entered as a characteristic for these instructions in a symbol table whether their variable
d1) has already been written in the current process (present),
d2) can be executed in parallel and has already been calculated if the current process requires the variable (determined),
d3) can be executed in parallel and possibly has not yet been calculated if the current process requires the variable (unknown),
e) in which, in the compiled program, the instructions for which case d1) applies are provided with a first tagging sign, on the other hand the instructions for which case d3) applies are provided with a second tagging sign,
f) in which the result of an executed instruction is tagged according to its characteristics and the result variable is entered with its characteristics in the symbol table.

2. Method according to Claim 1, in which, for branching commands, the characteristic of the results is established for each branch and is entered in the symbol table, in which the result and the symbol table of the branch whose characteristics are the most unfavourable are chosen as the result of the branching command.

3. Method according to Claim 1, in which, in the case of a recursion instruction or a loop instruction, the starting characteristic present and dereferencing is taken as the basis and the function is iteratively analyzed until the characteristics no longer change.

4. Method according to one of the preceding claims, in which all the variables which have the characteristic determined are assigned the characteristic present and for this purpose there is additionally inserted an instruction which stops the execution of the instruction until the variable is determined.

## Revendications

1. Procédé pour le traitement d'un programme d'application sur un système informatique parallèle,
a) dans lequel les procédures individuelles sont traitées sur des systèmes informatiques différents,
b) dans lequel le code du programme d'application est mis en mémoire,
c) dans lequel lors de la compilation du programme d'application, on détermine pour chaque instruction au moyen d'une liste dans laquelle est indiqué si l'exécution d'une instruction nécessite un accès à une donnée (déréférencée) ou non, si son exécution nécessite un accès à une donnée,
d) dans lequel pour ces instructions on introduit dans un tableau de symboles à titre de caractéristique si sa variable
d1) a déjà été écrite dans la procédure actuelle (present),
d2) peut être exécutée en parallèle et qu'elle a déjà été calculée, lorsque la procédure actuelle nécessite la variable (determined),
d3) est exécutable en parallèle et qu'elle n'est éventuellement pas encore calculée, lorsque la procédure actuelle nécessite la variable (unknown),
e) dans lequel dans le programme traduit les instructions sont munies d'une première marque, qui vaut pour le cas d1), alors qu'elles sont munies d'une deuxième marque qui vaut dans le cas d3),
f) dans lequel le résultat d'une instruction exécutée est marqué conformément à ces caractéristiques et la variable de résultat est introduite dans le tableau de symboles avec ces caractéristiques.

2. Procédé selon la revendication 1,
dans lequel dans le cas de commande de branchement, on détermine pour chaque branche la caractéristique des résultats et on introduit celle-ci dans le tableau de symboles dans lequel on choisit le résultat de la commande de branchement en tant que résultat et le tableau de symboles de la branche dont les caractéristiques sont les moins favorables.

3. Procédé selon la revendication 1,
dans lequel, dans le cas d'une instruction de récursion, respectivement dans le cas d'une instruction de boucle, on part de la caractéristique initiale present et déréférencée et on analyse la fonction par itération jusqu'à ce que ces caractéristiques ne changent plus.

4. Procédé selon l'une quelconque des revendications précédentes, dans lequel on attribue à toutes les variables qui présentent la caractéristique determined la caractéristique present et on introduit en outre une instruction supplémentaire qui arrête l'exécution de l'instruction jusqu'à ce que la variable soit déterminée.
